# EUROPEAN PATENT SPECIFICATION

(11) **EP 3 561 335 B1**
(45) Date of publication and mention of the grant of the patent: **16.09.2020**
(21) Application number: 18168934.0
(22) Date of filing: 24.04.2018
(51) Int. Cl.: F16D 53/00

(54) **CROWN BRAKE DEVICE FOR MOTOR-VEHICLES, AND WHEEL SUPPORT ASSEMBLY INCLUDING THIS DEVICE**
KRONENBREMSVORRICHTUNG FÜR KRAFTFAHRZEUGE UND RADTRÄGERANORDNUNG MIT DIESER VORRICHTUNG
DISPOSITIF DE FREIN DE COURONNE DESTINÉ À DES VÉHICULES À MOTEUR ET ENSEMBLE DE SUPPORT DE ROUE COMPRENANT CE DISPOSITIF

(43) Date of publication of application: 30.10.2019
(73) Proprietor: FCA Italy S.p.A., 10135 Torino (IT)
(72) Inventor: BADINO, Mr Renato, 10135 Torino (IT); LUCÀ, Stefano, 10135 Torino (IT); SANDRI, Silvano, 10135 Torino (IT)
(74) Representative: Notaro, Giancarlo

(56) References cited:
- DE-A1- 2 828 925
- FR-A1- 2 471 513
- US-A- 3 974 895
- US-A1- 2007 051 569

## Description

### Field of the invention

The present invention relates to crown brake devices for motor-vehicles, of the type comprising:
- a crown element intended to be connected in rotation with a motor-vehicle wheel hub
- wherein the crown element has a cup-shaped body with a main axis,
- wherein said cup-shaped body includes a peripheral cylindrical wall having an outer cylindrical surface and an inner cylindrical surface,
- a brake caliper, which can be activated to push an inner friction pad and to pull an outer friction pad along an axis directed radially with respect to the axis of the crown element, engaging, respectively, against said inner cylindrical surface and against said outer cylindrical surface, to cause the braking of the rotation of the crown element,
- wherein said brake caliper has a body including a hydraulic cylinder, having an axis substantially coincident with said radial axis, with a hydraulic chamber and a piston slidably mounted in the cylinder and configured to radially press the inner friction pad against said inner cylindrical surface when the hydraulic chamber receives pressurized fluid, the body of the caliper being - at the same time - configured, in this condition, to radially press the outer friction pad against said outer cylindrical surface.

### Prior art

Crown brake devices of the type indicated above are, for example, described in documents FR-A-2 535 423 and FR-A-2 386 736.

Known devices of the type indicated above have had little success so far, mainly due to a series of drawbacks. A first drawback is related to the fact that the brake caliper acts - in this case - along a radial axis instead of along an axial direction, as in conventional disc brakes. For this reason, the brake caliper occupies a considerable space within the cup-shaped body of the crown element, which may constitute a limitation, particularly in the case of wheels with a relatively small diameter.

Another disadvantage of crown brake devices lies in the fact that the friction pads engage cylindrical surfaces in them, whose curvature is more accentuated as the diameter of the crown element gets smaller. Consequently, especially in the case of relatively small wheels, an incorrect and non-uniform consumption of the friction pads can occur.

Studies and experiments carried out by the Applicant have shown that crown brake devices of the aforesaid type can be of interest, also thanks to the increasing diffusion of cars that use wheels with a relatively large diameter.

**A crown brake device according to the preamble of claim 1 is known from** FR 2 471 513 A1**. A similar solution for a motorcycle application is known from** US 2007/051569 A1**.**

### Object of the invention

It is therefore an object of the present invention to provide a crown brake device for motor-vehicles that is able to overcome the drawbacks of the known solutions described above.

A further object of the invention is to provide a crown brake device for motor-vehicles that is constructively simpler, smaller in size and more reliable and precise during operation with respect to crown brake devices manufactured to date.

A further object of the invention is to provide a crown brake device that is also more advantageous with respect to a corresponding conventional type of disc brake device, both from the point of view of constructive simplicity and reduction of weight, and from the point of view of operating efficiency, as well as from the point of view of ease of maintenance operations.

### Summary of the invention

In view of achieving the aforesaid objects, the invention relates to a crown brake device for motor-vehicles, having all the characteristics indicated **in claim 1.**

In the preferred embodiment, the support of the motor-vehicle wheel includes - in a single piece - an auxiliary bracket to which the aforesaid guide pins are rigidly connected. In this preferred embodiment, the two cylindrical guide pins are arranged symmetrically with respect to said radial axis.

In the preferred embodiment, the caliper body includes two side bushing-shaped portions, which are slidably mounted above the aforesaid guide pins, preferably with the interposition of bushings with a low coefficient of friction.

Thanks to the aforesaid characteristics, the crown brake device according to the invention can achieve a number of important advantages.

First of all, the slidable assembly of the caliper body above guide pins carried in a cantilever manner by the relative support guarantees, on one hand, a precise and correct operation of the brake caliper and of the friction pads, and on the other hand, it involves a drastic reduction of the caliper size with respect to known crown brake devices, in which the caliper support is configured to act as a prismatic guide for the movement of the caliper.

Reducing the size of the support device of the caliper also entails a drastic reduction in weight.

Thanks to the greater precision and greater operative reliability, the crown brake device according to the invention is also better-performing and more efficient relative to a corresponding conventional brake disc device. The same cup-configuration of the crown element facilitates cooling of the brake, thanks to the considerable increase of the braking surface exposed to heat exchange with the environment.

Maintenance operations on the brake device are also easier, as the crown element can be removed without removing the caliper and the friction pads.

A further advantage of the invention lies in the fact that the space inside the crown element can be exploited to position adjacent elements of the motor-vehicle suspension in the best way, for example, a connecting joint between a lower suspension arm and the support wheel.

### Detailed description of an embodiment

Further characteristics and advantages of the invention will become apparent from the description that follows with reference to the attached drawings, provided purely by way of non-limiting example, wherein:
- Figure 1 is a perspective view of a wheel rim of a motor-vehicle with an associated crown brake device according to the invention.
- Figure 2 is a perspective view of the inner side of the wheel that shows the wheel support with the crown brake device associated therewith,
- Figure 3 is a view from the outer side of the wheel of the wheel hub, of the wheel support and of the brake caliper forming part of the device according to the invention, the wheel and the crown element being removed for clarity of illustration,
- Figure 4 is a partial cross-sectional view in a plane containing the wheel axis, showing the wheel rim, the wheel hub, the wheel support and the crown brake device according to the invention,
- Figure 5 is a view of a detail of Figure 4 along the line V-V of Figure 4,
- Figure 6 is a cross-sectional view along the line VI-VI of Figure 4, and
- Figure 7 is another partial cross-sectional view of the assembly of Figure 4.

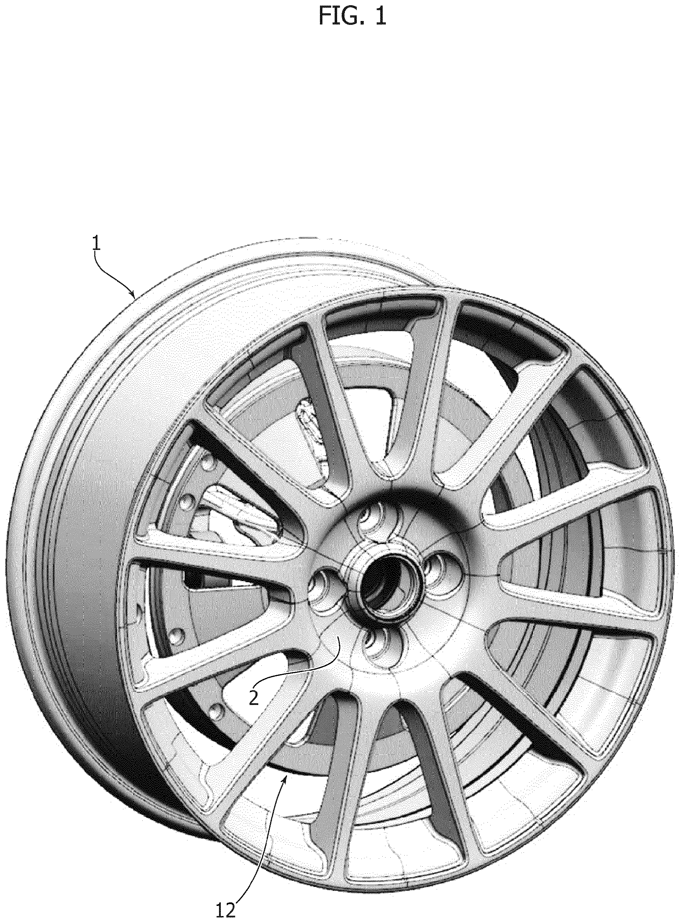

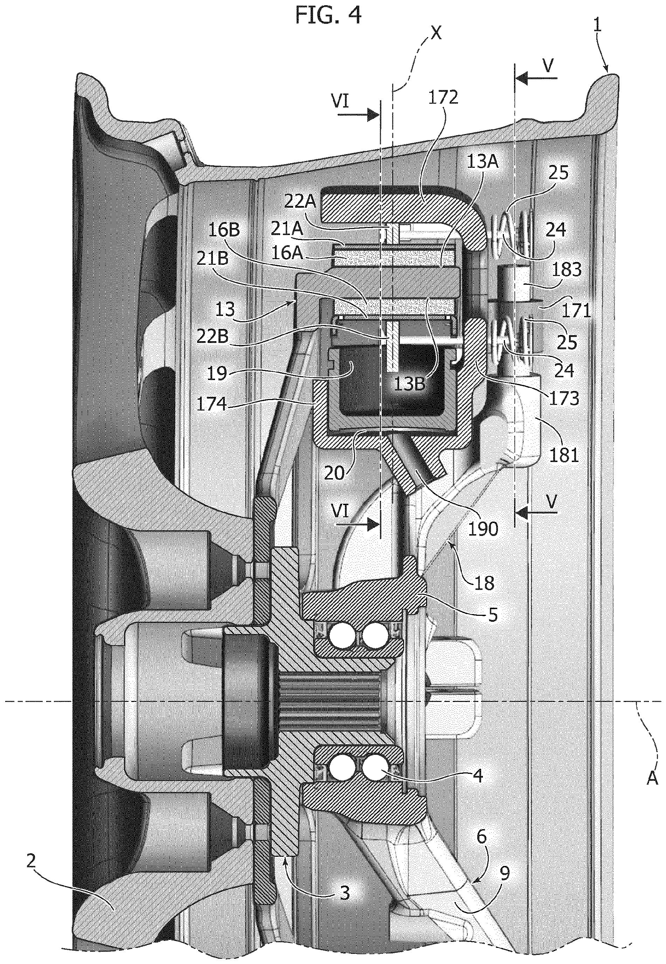

In Figure 1, the reference numeral 1 indicates - in its entirety - a wheel rim having a central disc 2 rigidly connected, according to the conventional art, by means of screws (not shown) to a wheel-bearing hub 3. Still according to the conventional art, the wheel-bearing hub 3 (see Figure 4) is rotatably mounted by means of a rolling bearing 4 within the central body 5 of a wheel support 6.

Again, according to the conventional art, the body of the wheel support 6 includes arms 7, 8, 9 terminating with attachments for mounting connecting joints to respective arms of the suspension of the motor-vehicle (not shown). The wheel support 6 also incorporates an arm 10 terminating with an attachment for a joint for connection to a steering tie-rod, which allows control of the steering of the wheel support about a steering axis defined by the connecting joints of the arms 7, 9 of the wheel support to the upper and lower arms of the suspension (not illustrated).

Of course, the specific configuration of the wheel support 6 illustrated in the attached drawings is hereby given purely by way of example, being evident that the brake device according to the invention can be applied to any configuration of the wheel support and to any configuration of the suspension. Furthermore, the attached drawings show, by way of example, the case of a steering front wheel, but the invention is, however, also applicable to a rear wheel.

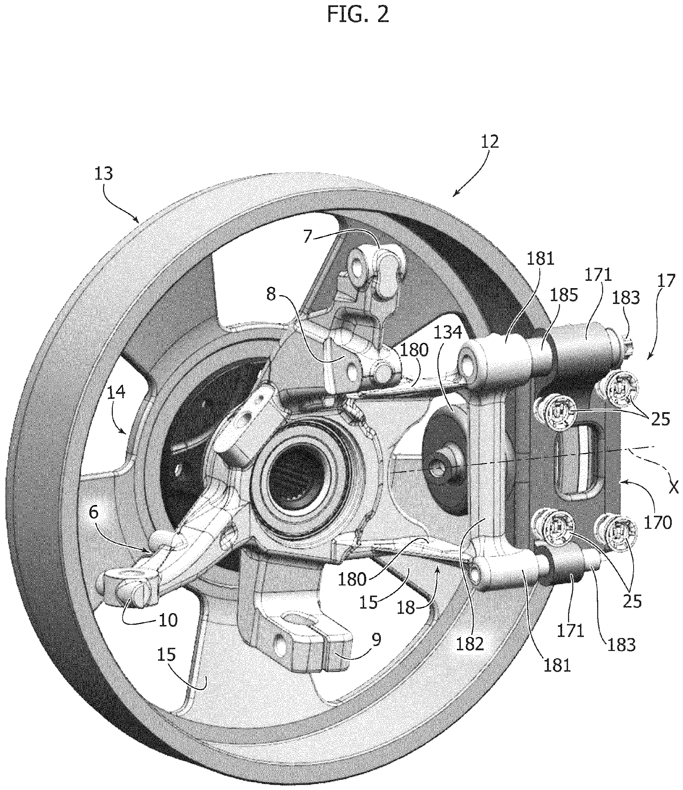

With reference in particular to Figure 2, the reference number 11 indicates - in its entirety - a crown brake device that is associated with the wheel support 6.

The crown brake device 11 comprises a crown element 12 having a substantially cup-shaped body, with a peripheral cylindrical wall 13 connected to a central disc 14 by a plurality of spokes 15.

The specific configuration of the crown element 12 can also vary widely with respect to that illustrated by way of example in the attached drawings, the only essential element being the cup-conformation of the element 12, with the peripheral cylindrical wall 13.

With particular reference to Figure 4, the peripheral cylindrical wall 13 has an outer cylindrical surface 13A and an inner cylindrical surface 13B cooperating with an outer friction pad 16A, and an inner friction pad 16B carried by a brake caliper, which is indicated - in its entirety - by the reference number 17.

In the case of the preferred embodiment, the brake caliper 17 is carried by an auxiliary bracket 18 made in a single piece with the wheel support 6. However, the case in which the bracket 18 for supporting the brake caliper 17 is constituted by a separate element rigidly connected to the wheel support 6 also falls within the present invention.

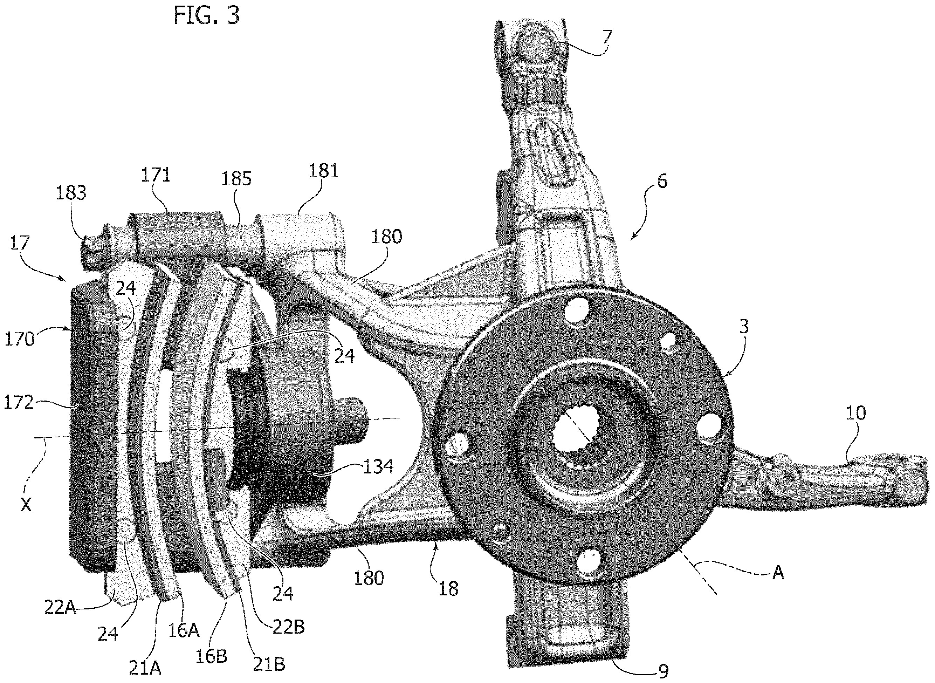

As can be seen, in particular, in Figures 2 and 3, the support bracket 18 comprises, in the case of the illustrated example, a pair of arms 180 projecting from the wheel support 6 in a cantilever manner, and terminating with bushing-shaped end portions 181, connected together by a cross member 182, also formed in a single piece with the bracket 18 and with the wheel support 6.

As will become clear below, the brake caliper 17, when activated, pushes the two friction pads 16A, 16B along an axis X directed radially with respect to the axis A of the wheel. The two bushing portions 181 at the ends of the bracket 18 are oriented along two axes X1 parallel to the radial axis X and symmetrically arranged at the two sides thereof.

The brake caliper 17 comprises a caliper body 170 including two bushing-shaped side portions 171, which are slidably mounted along the aforesaid axes X1 above two cylindrical guide pins 183 projecting in a cantilever manner from the bushing portions 181 of the bracket 18.

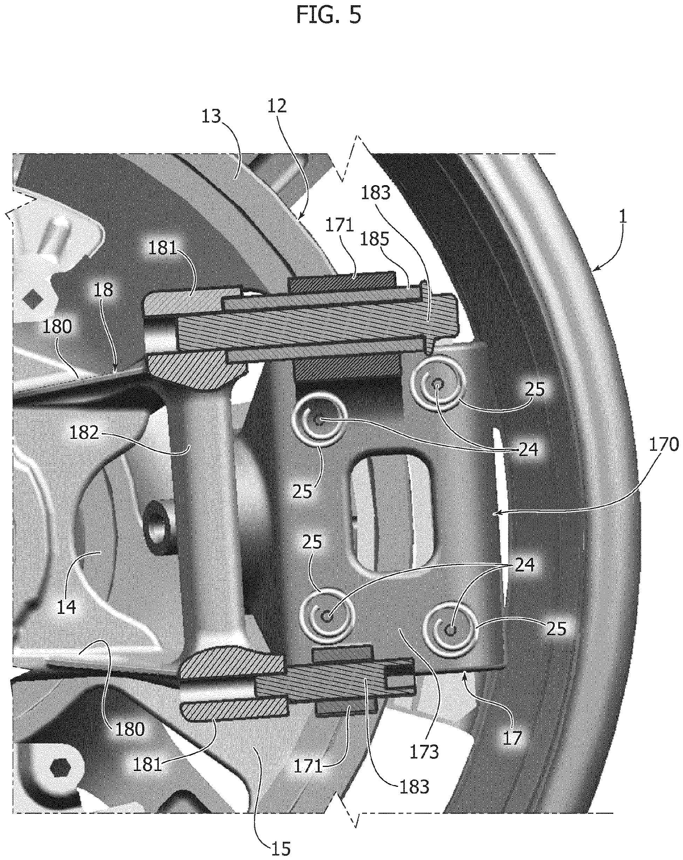

As shown in particular in Figure 5, each pin 183 consists of a screw having an end portion screwed into a corresponding thread of the inner hole 184 of the respective bushing portion 181. Alternatively, the pins 183 can be mounted with interference within the holes 184 of the bushing portions 181. As can be seen in Figure 5, the pins 183 are arranged along the axes X1 and slidably support the respective bushing portions 171 of the body 170 of the brake caliper. In the case of at least one of the pins 183, the respective bushing portion 181 is slidably mounted thereon by interposing a bushing 185 of material with a low coefficient of friction.

Referring again to Figures 2-6, the body 170 of the brake caliper 17 has a general C-shaped configuration, with a flange 172 arranged on the outside of the cylindrical wall 13 of the crown element 12, an intermediate portion 173 facing the circumferential end edge of the cylindrical wall 13, and a radially inner portion 174 that defines the body of a hydraulic cylinder having an axis coinciding with the radial axis X on which the brake caliper 17 operates. According to a conventional art, a piston 19 is slidably mounted in the cylinder defined by the portion 174 of the body 170 of the brake caliper, which in the illustrated example presents a cup-shaped body. A hydraulic chamber 20 is defined between the bottom wall of the piston 19 and the bottom wall of the cylinder 174, configured to receive pressurized fluid by means of an inlet fitting 190.

When the chamber 20 is supplied with pressurized fluid, the piston 19 pushes a plate 21B, carrying the inner friction pad 16B, against the inner surface 13B of the cylindrical wall 13 of the crown element 12. At the same time, when the chamber 20 receives pressurized fluid, it causes a relative displacement of the body 170 of the brake caliper with respect to the piston 19 along the radial axis X, so that the outer flange 172 of the brake caliper body 170 pushes a plate 21A carrying the outer friction pad 16A against the outer surface 13A of the cylindrical wall 13.

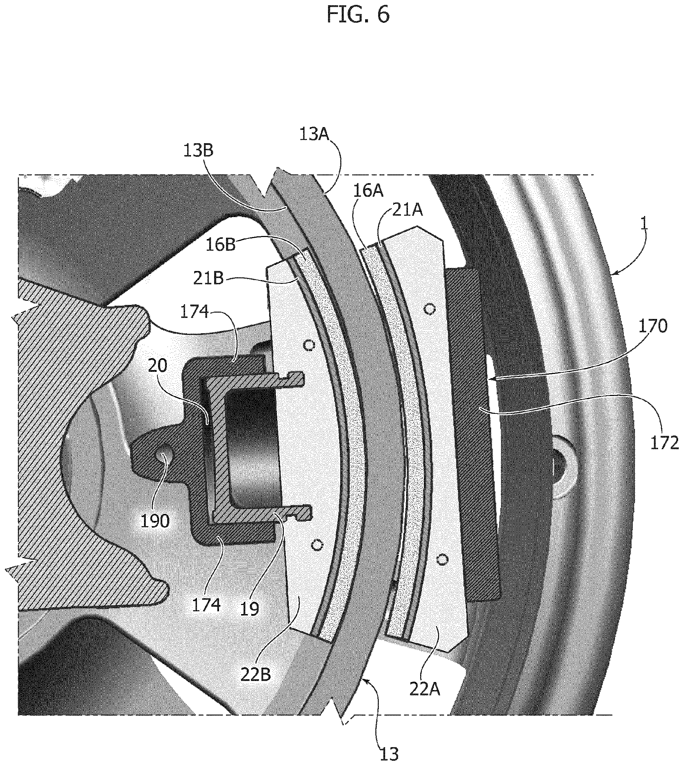

In the case of the illustrated example, the plates 21A, 21B carrying the friction pads 16A, 16B are rigidly connected to two auxiliary plates 22A, 22B substantially orthogonal to the respective plates 21A, 21B, so as to create therewith a T-shaped configuration. The auxiliary plates 22A, 22B, in turn, are each associated with a pair of transverse pins 23, 24, which are engaged across through-openings of the intermediate portion 173 of the body of the brake caliper, and which are recalled by helical springs 24 towards a stroke end position in which each pad-carrying plate is pressed laterally against the intermediate portion 173 of the body of the brake caliper. Each helical spring 24 is interposed between the outer surface of the intermediate portion 173 of the body 170, and an enlarged head 25 associated with each pin 24. Thus, vibrations of the pad-carrying plates are prevented, leaving however the pad-carrying plates a certain freedom to float in order to best adapt to the brake surfaces with which they enter into engagement. With reference to Figures 3 and 6, the plate 22B is anchored within diametrically opposite grooves formed in the cup-shaped body of the piston 19. The plate 22A, instead, simply rests against the outer flange 72 of the body 170 of the brake caliper, and is held in position by the aforesaid pins 24 with the relative springs 25.

Of course, the specific means used to connect each pad-carrying plate to the body of the brake caliper can also be produced in any other known manner, different from that illustrated herein purely by way of example.

As is evident from the present description, the brake device according to the invention has the advantage of guaranteeing accurate and reliable guiding of the movement of the brake caliper, thanks to the provision of cylindrical guide pins 183 projecting in a cantilever manner from the support 18 of the brake caliper. This solution also has the advantage of involving a very small size of the support 18, since the support is not configured to act as a prismatic guide of the movement of the body of the caliper.

Moreover, the preferred embodiment shown here is particularly advantageous, wherein the support 18 bearing the cylindrical guide pins of the brake caliper is formed in a single piece with the wheel support 6.

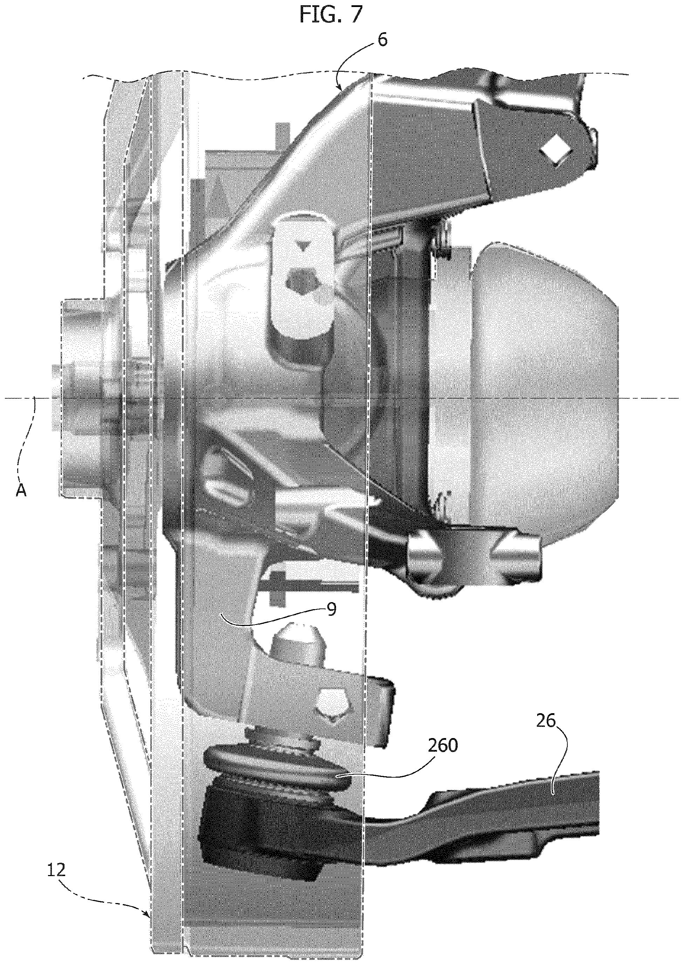

The crown element 12 has the advantage of being able to exploit the space inside the crown element, in the area diametrically opposite to the brake caliper 17, to receive the vehicle suspension elements therein. Figure 7 shows, by way of example, the case in which a joint 260 for connecting a suspension arm 26 to the lower arm 9 of the wheel support 6 can be arranged within the cavity defined by the crown element 12, which allows it to ensure that the steering axis of the wheel support 6 passing through the joint 25 and through the corresponding joint (not illustrated) associated with the upper arm 7 of the wheel support 6, is oriented in the best way.

Of course, without prejudice to the principle of the invention, the details of construction and the embodiments may vary widely with respect to those described and illustrated purely by way of example, without departing from the scope of the present invention.

## Claims

1. A crown brake device for motor-vehicles, comprising
- a crown element (12) intended to be connected in rotation with a motor-vehicle wheel hub (3),
- wherein the crown element (12) has a cup-shaped body with a main axis (A),
- wherein said cup-shaped body includes a peripheral cylindrical wall (13) having an outer cylindrical surface (13A) and an inner cylindrical surface (13B),
- a brake caliper (17) that can be activated to pull an outer friction pad (16A) and to push an inner friction pad (16B) along an axis (X) directed radially with respect to the axis (A) of the crown element (12), to cause braking of the rotation of the crown element (12),
- wherein said brake caliper (17) has a body (170) including a hydraulic cylinder (134), having an axis substantially coincident with said radial axis (X), with a hydraulic chamber (20) and a piston (19) slidably mounted in the cylinder (134), and configured to radially press the inner friction pad (16B) against said inner cylindrical surface (16B) when the hydraulic chamber (20) receives pressurized fluid, the body (170) of the brake caliper (17) being also configured, in this condition, to radially press the outer friction pad (16A) against said outer cylindrical surface (13A),
wherein the body (170) of the brake caliper (17) is slidably supported on at least two cylindrical guide pins (183) arranged parallel to said radial axis (X), and wherein said cylindrical guide pins (183) project in a cantilever manner from a support (18) of the brake caliper,
wherein the body (170) of the brake caliper (17) has a general C-shaped configuration, with an outer flange (172) arranged radially outwards of the cylindrical wall (13) of the crown element (12), an inner portion (174) constituting said hydraulic cylinder, arranged radially inside the cylindrical wall (13) of the crown element (12) and an intermediate portion (173) facing the circumferential end edge of said cylindrical wall (13) of the crown element (12), and provided with two bushing-shaped portions (171), which are slidably mounted over said cylindrical guide pins (183),
said brake device being **characterized in that** it comprises an outer pad-carrying plate (21A) and an inner pad-carrying plate (21B), each of said pad-carrying plates (21A, 21B) being rigidly connected to an auxiliary plate (22A, 22B) perpendicular thereto, each auxiliary plate (22A, 22B) on its turn being connected to one or more support rods (24) directed parallel to the axis of the crown element (A) and engaged through openings passing through said intermediate portion (173) of the body (170) of the crown element, each support rod (24) being recalled by a spring (25) towards an end position wherein the respective pad-carrying plate (21A, 21B) is pushed laterally into engagement against said intermediate portion (173) of the body (170) of the brake caliper.

2. A brake device according to claim 1, **characterized in that** said support is configured to be rigidly connected to a wheel support (6) of the motor-vehicle.

3. A brake device according to claim 1, **characterized in that** at least one of said bushing-shaped portions (171) of the body (170) of the brake caliper (17) is slidably mounted on the respective cylindrical guide pin (183) with the interposition of a bushing (185) with a low coefficient of friction.

4. A brake device according to claim 1, **characterized in that** the two cylindrical guide pins (183) are arranged symmetrically with respect to said radial axis (X).

5. A motor-vehicle wheel support assembly, comprising a wheel support (6) and a brake device (1) according to any one of claims 1-4, said assembly being **characterized in that** said cylindrical guide pins (183) on which the body (170) of the brake caliper (17) is slidably mounted, project in a cantilever manner from an auxiliary bracket (18) formed in a single piece with the wheel support (6).

6. An assembly according to claim 5, **characterized in that** said auxiliary support bracket (18) includes a pair of arms (180) having bushing-shaped end portions (181), and arranged according to two axes (X1) parallel and symmetrical with respect to said radial axis (X), said cylindrical guide pins (183) having ends rigidly inserted within said bushing portions (181) of the auxiliary bracket and projecting in a cantilever manner from them.

## Patentansprüche

1. Kronenbremsvorrichtung für Kraftfahrzeuge, umfassend
- ein Kronenelement (12), das dazu vorgesehen ist, in Drehung mit einer Kraftfahrzeugradnabe (3) verbunden zu werden,
- wobei das Kronenelement (12) einen schalenförmige Körper mit einer Hauptachse (A) aufweist,
- wobei der schalenförmige Körper eine umlaufende zylindrische Wand (13) mit einer äußeren zylindrischen Fläche (13A) und einer inneren zylindrischen Fläche (13B) aufweist,
- einen Bremssattel (17), der dazu aktiviert werden kann, einen äußeren Bremsbelag (16A) heranzuziehen und einen inneren Bremsbelag (16B) wegzuschieben, entlang einer Achse (X), die radial bezüglich der Achse (A) des Kronenelements (12) verläuft, um die Bremsung der Drehung des Kronenelements (12) zu bewirken,
- wobei der Bremssattel (17) einen Körper (170) einschließlich eines Hydraulikzylinders (134) aufweist, der eine Achse besitzt, die im Wesentlichen mit der radialen Achse (X) übereinstimmt, mit einer Hydraulikkammer (20) und einem Kolben (19), der gleitfähig in dem Zylinder (134) montiert ist, und dazu ausgelegt ist, den inneren Bremsbelag (16B) radial gegen die innere zylindrische Fläche (16B) zu pressen, wenn die Hydraulikkammer (20) ein Druckfluid aufnimmt, wobei der Körper (170) des Bremssattels (17) in diesem Zustand außerdem dazu ausgelegt ist, den äußeren Bremsbelag (16A) radial gegen die äußere zylindrische Fläche (13A) zu pressen,
wobei der Körper (170) des Bremssattels (17) gleitfähig an mindestens zwei zylindrischen Führungsstiftern (183) gelagert ist, die parallel zu der radialen Achse (X) angeordnet sind, und wobei die zylindrischen Führungsstifte (183) in freitragender Weise von einer Halterung (18) des Bremssattels (17) vorstehen,
wobei der Körper (170) des Bremssattels (17) einen im Allgemeinen C-förmigen Aufbau aufweist, wobei ein äußerer Flansch (172) radial außerhalb der zylindrischen Wand (13) des Kronenelements (12) angeordnet ist, ein innerer Abschnitt (174), der den Hydraulikzylinder bildet, radial innerhalb der zylindrischen Wand (13) des Kronenelements (12) angeordnet ist, und einen Zwischenabschnitt (173), der zu der umfänglichen Endkante der zylindrischen Wand (13) des Kronenelements (12) ausgerichtet ist, und mit zwei buchsenförmigen Abschnitten (171) versehen ist, die gleitfähig über den zylindrischen Führungsstiften (183) montiert sind,
wobei die Bremsvorrichtung **dadurch gekennzeichnet ist, dass** sie eine äußere Belagträgerplatte (21A) und eine innere Belagträgerplatte (21B) umfasst, jede der Belagträgerplatten (21A, 21B) jeweils fest mit einer Hilfsplatte (22A, 22B) verbunden ist, die lotrecht dazu verläuft, die Hilfsplatten (22A, 22B) ihrerseits jeweils mit einer oder mehreren Trägerstangen (24) verbunden sind, die parallel zu der Achse des Kronenelements (A) verlaufen und durch Öffnungen führen, die durch den Zwischenabschnitt (173) des Körpers (170) des Kronenelements verlaufen, wobei jede Trägerstange (24) durch eine Feder (25) in Richtung einer Endposition zurückgezogen wird, wobei die jeweilige Belagträgerplatte (21A, 21B) lateral in Eingriff gegen den Zwischenabschnitt (173) des Körpers (170) des Bremssattels gedrückt wird.

2. Bremsvorrichtung nach Anspruch 1, **dadurch gekennzeichnet, dass** der Träger dazu ausgelegt ist, fest mit einem Radträger (6) des Kraftfahrzeugs verbunden zu werden.

3. Bremsvorrichtung nach Anspruch 1, **dadurch gekennzeichnet, dass** mindestens einer der bogenförmigen Abschnitte (171) des Körpers (170) des Bremssattels (17) mit der Zwischenschaltung einer Buchse (185) mit einem geringen Reibungskoeffizienten gleitfähig auf dem jeweiligen zylindrischen Führungsstift (183) montiert ist.

4. Bremsvorrichtung nach Anspruch 1, **dadurch gekennzeichnet, dass** die zwei zylindrischen Führungsstifte (183) symmetrisch bezüglich der radialen Achse (X) angeordnet sind.

5. Radträgeranordnung für ein Kraftfahrzeug, umfassend einen Radträger (6) und eine Bremsvorrichtung (1) nach einem der Ansprüche 1 bis 4, wobei die Anordnung **dadurch gekennzeichnet ist, dass** die zylindrischen Führungsstifte (183), an welchen der Körper (170) des Bremssattels (17) gleitfähig montiert ist, in freitragender Weise von einem Hilfsbügel (18) vorstehen, der einstückig mit dem Radträger (6) ausgebildet ist.

6. Anordnung nach Anspruch 5, **dadurch gekennzeichnet, dass** der Hilfshaltebügel (18) ein Paar aus Armen (180) beinhaltet, die buchsenförmige Endabschnitte (181) aufweisen und entsprechend zwei Achsen (X1) angeordnet sind, die parallel und symmetrisch bezüglich der radialen Achse (X) verlaufen, wobei die zylindrischen Führungsstifte (183) Enden aufweisen, die fest in die Buchsenabschnitte (181) des Hilfsbügels eingesetzt sind und in freitragender Weise davon vorstehen.

## Revendications

1. Dispositif de freinage à couronne pour véhicules automobiles, comprenant
- un élément de couronne (12) destiné à être relié en rotation à un moyeu de roue de véhicule automobile (3),
- dans lequel l'élément de couronne (12) a un corps en forme de coupelle avec un axe principal (A),
- dans lequel ledit corps en forme de coupelle comporte une paroi cylindrique périphérique (13) ayant une surface cylindrique externe (13A) et une surface cylindrique interne (13B),
- un étrier de frein (17) qui peut être activé pour tirer une plaquette de frein externe (16A) et pour pousser une plaquette de frein interne (16B) le long d'un axe (X) dirigé radialement par rapport à l'axe (A) de l'élément de couronne (12), pour provoquer le freinage de la rotation de l'élément de couronne (12),
- dans lequel ledit étrier de frein (17) a un corps (170) comportant un vérin hydraulique (134), ayant un axe coïncidant sensiblement avec ledit axe radial (X), avec une chambre hydraulique (20) et un piston (19) monté coulissant dans le vérin (134), et configuré pour presser radialement la plaquette de frein interne (16B) contre ladite surface cylindrique interne (16B) lorsque la chambre hydraulique (20) reçoit un fluide sous pression, le corps (170) de l'étrier de frein (17) étant également configuré, dans cette condition, pour presser radialement la plaquette de frein externe (16A) contre ladite surface cylindrique externe (13A),
dans lequel le corps (170) de l'étrier de frein (17) est supporté en coulissement sur au moins deux broches de guidage cylindriques (183) agencées parallèlement audit axe radial (X), et où lesdites broches de guidage cylindriques (183) font saillie en porte-à-faux à partir d'un support (18) de l'étrier de frein,
dans lequel le corps (170) de l'étrier de frein (17) a une configuration générale en forme de C, avec une bride externe (172) agencée radialement vers l'extérieur de la paroi cylindrique (13) de l'élément de couronne (12), une partie interne (174) constituant ledit vérin hydraulique, agencée radialement à l'intérieur de la paroi cylindrique (13) de l'élément de couronne (12) et une partie intermédiaire (173) tournée vers le bord d'extrémité circonférentiel de ladite paroi cylindrique (13) de l'élément de couronne (12), et pourvu de deux parties en forme de douille (171), qui sont montées coulissante sur lesdites broches de guidage cylindriques (183),
ledit dispositif de freinage étant **caractérisé en ce qu'**il comprend une plaque de support de plaquette externe (21A) et une plaque de support de plaquette interne (21B), chacune desdites plaques de support de plaquette (21A, 21B) étant reliée rigidement à une plaque auxiliaire (22A, 22B) perpendiculaire à celle-ci, chaque plaque auxiliaire (22A, 22B) étant à son tour reliée à une ou plusieurs tige(s) de support (24) dirigée(s) parallèlement à l'axe de l'élément de couronne (A) et engagée(s) à travers des ouvertures traversant ladite partie intermédiaire (173) du corps (170) de l'élément de couronne, chaque tige de support (24) étant rappelée par un ressort (25) vers une position d'extrémité dans laquelle la plaque de support de plaquette respective (21A, 21 B) est poussée latéralement pour s'engager contre ladite partie intermédiaire (173) du corps (170) de l'étrier de frein.

2. Dispositif de freinage selon la revendication 1, **caractérisé en ce que** ledit support est configuré pour être relié rigidement à un support de roue (6) du véhicule automobile.

3. Dispositif de freinage selon la revendication 1, **caractérisé en ce qu'**au moins l'une desdites parties en forme de douille (171) du corps (170) de l'étrier de frein (17) est montée coulissante sur la broche de guidage cylindrique respective (183) avec l'interposition d'une douille (185) avec un faible coefficient de frottement.

4. Dispositif de freinage selon la revendication 1, **caractérisé en ce que** les deux broches de guidage cylindriques (183) sont agencées symétriquement par rapport audit axe radial (X).

5. Ensemble de support de roue de véhicule automobile, comprenant un support de roue (6) et un dispositif de freinage (1) selon l'une quelconque des revendications 1 à 4, ledit ensemble étant **caractérisé en ce que** lesdites broches de guidage cylindriques (183) sur lesquelles le corps (170) de l'étrier de frein (17) est monté coulissante, font saillie en porte-à-faux à partir d'une console auxiliaire (18) formée d'une seule pièce avec le support de roue (6).

6. Ensemble selon la revendication 5, **caractérisé en ce que** ladite console de support auxiliaire (18) comporte une paire de bras (180) ayant des parties d'extrémité en forme de douille (181), et agencés selon deux axes (X1) parallèles et symétriques par rapport audit axe radial (X), lesdites broches de guidage cylindriques (183) ayant des extrémités insérées rigidement dans lesdites parties de douille (181) de la console auxiliaire et faisant saillie en porte-à-faux à partir de celles-ci.
